# EUROPEAN PATENT SPECIFICATION

(11) **EP 0 717 122 B1**
(45) Date of publication and mention of the grant of the patent: **27.02.2002**
(21) Application number: 95203089.8
(22) Date of filing: 13.11.1995
(51) Int. Cl.: C22C 18/02, B60R 21/16

(54) **Air bag system with zinc-base alloy components**
Airbag-System bestehend aus zinkbasislegierten Komponenten
Coussin pneumatique de sécurité, comportant des éléments en un alliage à base de zinc

(30) Priority: 14.12.1994 US 356014
(43) Date of publication of application: 19.06.1996
(73) Proprietor: GENERAL MOTORS CORPORATION, Detroit Michigan 48202 (US)
(72) Inventor: Hanna, Michael David, Royal Oak, Michigan 48073 (US); Rashid, Moinuddin Sirdar, Bloomfield Hills, Michigan 48302 (US)
(74) Representative: Manitz, Finsterwald & Partner GbR

(56) References cited:
- FR-A- 722 010
- GB-A- 898 543
- GB-A- 1 281 759
- US-A- 4 990 310
- PATENT ABSTRACTS OF JAPAN vol. 013 no. 241 (C-604) ,6 June 1989 & JP-A-01 052039 (MITSUI MINING & SMELTING CO LTD) 28 February 1989,

## Description

### Field of the Invention

The invention relates to high strength, high temperature and high strain rate applications of a zinc-base alloy, and more particularly to applications of a zinc-copper-aluminum alloy in air bag system components.

### Background of the Invention

In a typical die casting operation, molten metal is injected at high pressure into a fixed-volume cavity defined by reusable water-cooled metal dies. Within the cavity, the metal is molded into a desired configuration and solidified to form a product casting. The metal is injected into the cavity by a shot apparatus comprising a sleeve for receiving a charge of the molten metal and a plunger that advances within the sleeve to force the metal into the cavity. Two types of shot apparatus are known. A hot chamber apparatus comprises a shot sleeve immersed in a bath of a molten metal. In a cold chamber apparatus, the molten charge is transferred, for example by ladle, into the shot apparatus from a remote holding furnace.

Zinc-base alloys are commonly formed by die casting, in large part because of a conveniently low melting point. Heretofore, zinc die castings have exhibited a microstructure characterized by soft phases, such as the eta or alpha phases in zinc-aluminum alloys, that lack stability even at moderately high temperatures. As a result, such alloys have had poor high temperature creep resistance that has restricted their use, mainly to decorative parts.

Rashid et al., US 4,990,310 discloses a creep-resistant zinc alloy including 4-11 percent copper, and 2-4 percent aluminum. The alloy includes a microstructure with an intimate combination of fine epsilon and eta phases that is particularly resistant to slip. As a result, the product die casting from the alloy exhibits improved strength and wear resistance primarily due to the epsilon phase, but also a dramatically improved creep resistance, particularly in comparison to similar zinc die castings that are substantially epsilon-free.

GB-A-1 281 759 discloses compression resistant zinc-based alloys including copper and aluminum together with beryllium, titanium and magnesium.

Commercial zinc alloys (Zamak and ZA alloys) are used mainly for decorative applications. They are rarely used in functional/structural applications because their strength and/or creep properties do not meet requirements. Instead, stronger materials like steel are used to meet specifications. Steel parts are usually machined, whereas, zinc alloys can be die cast to shape.

Furthermore, many automotive and nonautomotive components are required to withstand high forces at high strain rates. At higher temperatures (up to 150°C) the strain rate sensitivity becomes more important since low melting metals such as zinc alloys usually soften at this temperature. Thus, any increase in strength to offset this softening is an added value.

Some metals and alloys are strain rate sensitive at room temperatures, but, the magnitude of tensile strength increase is small or negligible. Stainless steel and different aluminum alloys have negligible strain rate sensitivity and the increase in tensile strength was minimal. The increase in strength is also very small with increasing strain rate in other types of aluminum alloys. No increase in tensile strength has been found in other nonferrous alloys such as copper and brass.

Different hot rolled steels, increase less than 10% in tensile strength with increased strain rate for the same strain rate range used in our study (10⁻⁵ to 10° sec⁻¹). When iron and miled steel are tested at higher temperatures (up to 200°C), the ultimate tensile strength does not increase with increasing strain rate, and they lose their strain rate sensitivity.

A variety of materials are available from which one may attempt to successfully fashion components from. Many automotive components are subject to very high loads, for example during an automobile crash. Many automotive components are subject to high temperatures such as those components under the hood or components which involve high temperature applications under dramatic loading. Conventional wisdom dictates that such components are constructed from relatively expensive, heavy alloys which often require machining.

The present invention overcomes many of the prior art shortcomings.

### SUMMARY OF THE INVENTION

The present invention includes high strength, high temperature and strain rate applications of a zinc-base alloy consisting of 4 to 12 weight percent copper and 2 to 4 weight percent aluminum and the balance zinc and impurities. The composition may also include minor components as impurities such as magnesium. The alloy is used to construct automotive components which are subject to an instantaneous force between 40-500 MPa. The alloy is particularly suitable for constructing components which are subject to such loads under high temperatures (higher than ambient temperature). In fact, components constructed from the alloy have greater relative strength at higher temperatures under sudden stress.

These and other objects, features and advantages will become apparent from the following brief description of the drawings, detailed description, and appended claims and drawings.

### Brief Description of the Drawings

Figure 1 is a cross sectional view of cold chamber casting zinc-aluminum-copper alloy;
Figure 2 is a cross sectional view of a hot chamber die casting machine for casting zinc-aluminum-copper alloy;
Figure 3 is a graph of the ultimate tensile strength of an alloy used to make components according to the present invention tested at room temperature with increasing strain rate;
Figure 4 is a graph of the ultimate tensile strength of an alloy, used to make components according to the present invention tested at 50°C with increasing strain rate;
Figure 5 is a graph of the ultimate tensile strength of an alloy, used to make components according to the present invention, tested at 100°C with increasing strain rate;
Figure 6 is a graph of the ultimate tensile strength of an alloy, used to make components according to the present invention, tested at 150°C with increasing strain rate;
Figure 7 is a graph of the percentage increase in ultimate tensile strength of the alloy with increasing temperature;
Figure 8 is an illustration of a vehicle steering system having an air bag module according to the present invention;
Figure 9 is a partial sectional view of an air bag module according to the present invention; and
Figure 10 is an enlarged view with portions removed of a wireless electric lead as shown in Figure 7.

### Detailed Description

Rashid et al., U.S. Patent No. 4,990,310, describes a creep resistant die casting form from a zinc-base alloy including about 4 to about 12 percent copper and about 2 to about 4 percent aluminum. That zinc, copper and aluminum alloy is now known as ACuZinc™. It has recently been discovered that the strength of a zinc-base alloy containing 4 to about 12 weight percent copper and about 2 to about 4 percent aluminum, prepared by the die casting process disclosed in the '310 patent has increased strength when the strain rate is increased by dynamic and fast loading. The strength of the component formed from the ACuZinc™ alloy is increased about 50 percent at room temperature, about 68% at 50°C.; about 220% at 100°C.; about 2600% at 150°C when the loading rate was increased from 10⁻⁵ to 10° sec⁻¹.

The ACuZinc™ alloys which exhibit such high strength under dramatic loading and temperature, include a duplex structure having a skin of fine grains of epsilon-phase (copper rich) ranging between 1-2 microns embedded in a matrix of η (zinc rich) and Alpha phase (aluminum rich). The inner portion of the component contains larger grain sizes of the epsilon phase.

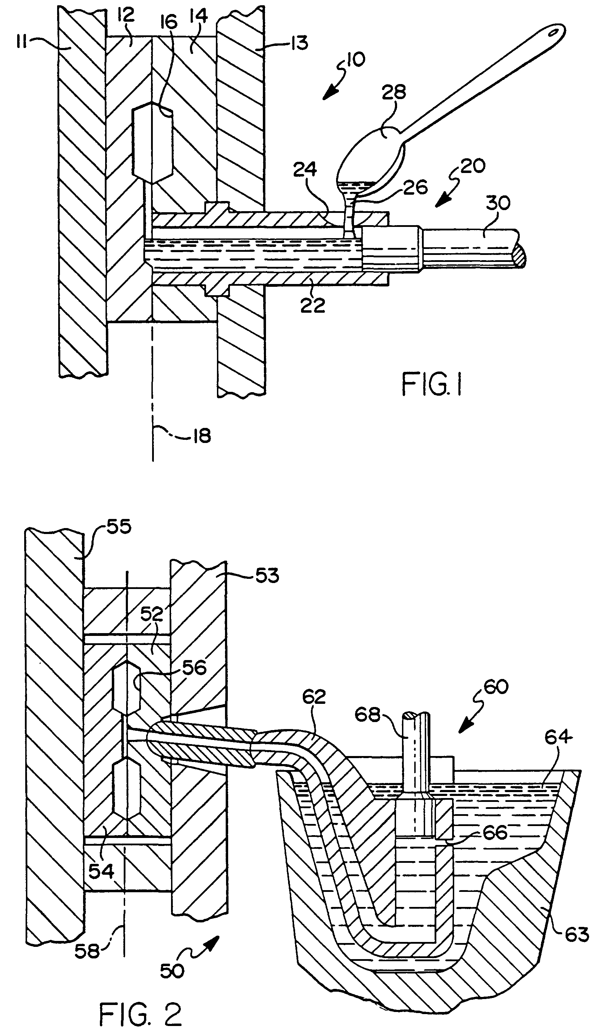

The ACuZinc™ die casting is prepared as follows. A die casting was formed of a zinc-base, copper-aluminum alloy (ACuZinc™) using a conventional cold chamber die casting machine shown schematically in Figure 1. The machine 10 may include a movable platen 11 and a stationary platen 13. Die halves 12 and 14 are mounted on platens 11 and 13, respectively, and cooled by water circulated through passages (not shown) therein. In the closed position shown in the figure, die halves 12 and 14 cooperate to define a fixed-volume die cavity 16 suitably sized and shaped for producing a casting of a desired configuration. At appropriate times during the casting cycle, platen 11 moves relative to platen 13 to part die halves 12 and 14 along a plane indicated by line 18 for ejection of a product casting. Machine 10 also includes a shot apparatus 20 comprising a generally cylindrical shot sleeve 22 that communicates with cavity 16. Sleeve 22 includes an inlet 24 for admitting a molten metal charge 26 poured, for example, from a suitable ladle 28. A hydraulically driven shot plunger 30 is slidably received in sleeve 22 and advances toward the die sections for forcing metal from sleeve 22 into cavity 16.

In accordance with an embodiment, charge 26 was composed of an alloy comprising 10.0 weight percent copper, 3.6 weight percent aluminum, 0.03 weight percent magnesium and the balance zinc and impurities. The charge was poured at a temperature of about 532°C into shot sleeve 22 through port 24. Slot plunger 30 was advanced to inject the charge into casting cavity 16. The cavity surface temperature was about 140°C. After filling the die cavity, the shot plunger continued to apply a load of 1340 kilograms for about 12 seconds. Within the die cavity, the metal cooled and solidified, whereafter the die sections were parted to eject a product casting.

In a second embodiment, zinc die castings were manufactured using a hot chamber die casting machine 50 shown schematically in Figure 2. Machine 50 comprises water-cooled die halves 52 and 54 mounted on a stationary platen 53 and a movable platen 55, respectively, adapted for moving die halves between a closed position shown in Figure 2 wherein the die halves cooperate to form a casting cavity 56 and an open position wherein the die halves are parted along a plane indicated by line 58 for ejection of a product casting. In accordance with common hot chamber die casting process, die casting machine 50 comprises a shot apparatus 60 formed of a goose neck sleeve 62 partially submerged in a molten metal bath 64 contained in melting pot 63. Shot apparatus 60 further comprises hydraulically driven plunger 68 slidably received in goose neck 62. When plunger 68 is in a retracted position shown in the figure, a charge of molten metal from bath 64 fills goose neck 62 through an inlet port 66. For casting, plunger 68 is driven downwardly to force molten metal through sleeve 62 into die cavity 56.

A hot chamber die casting was formed of an alloy containing 5.0 weight percent copper, 3.0 weight percent aluminum, 0.035 weight percent magnesium and the balance substantially zinc. The temperature of the charge was about 490°C. The casting cavity surface temperature was about 150°C. During injection, the melt was subjected to a pressing load of 62 kiloPascals.

Chemical composition of the test specimens used in this investigation was as described above. Specimens tested were 25.4 mm long x 5.33 mm diameter in the gauge section, and were used in the as-diecast condition, with the as-cast surface intact. Tests were performed using an Instron universal testing machine which has the capability of maintaining constant cross-head speed. Load-elongation data were recorded automatically during the tests. The specimens were loaded to failure and ultimate tensile strength calculated. Tests were conducted at four different temperatures (room temperature, 50°C, 100°C, and 150°C) using a temperature controlled chamber to insure constant temperature during the test. Cross-head speeds used were 0.02, 0.2, 2, 20, 200 and 500 mm/min, which provided strain rates ranging from 1.3 x 10⁻⁵ to 3.2 x 10⁻¹ sec⁻¹.

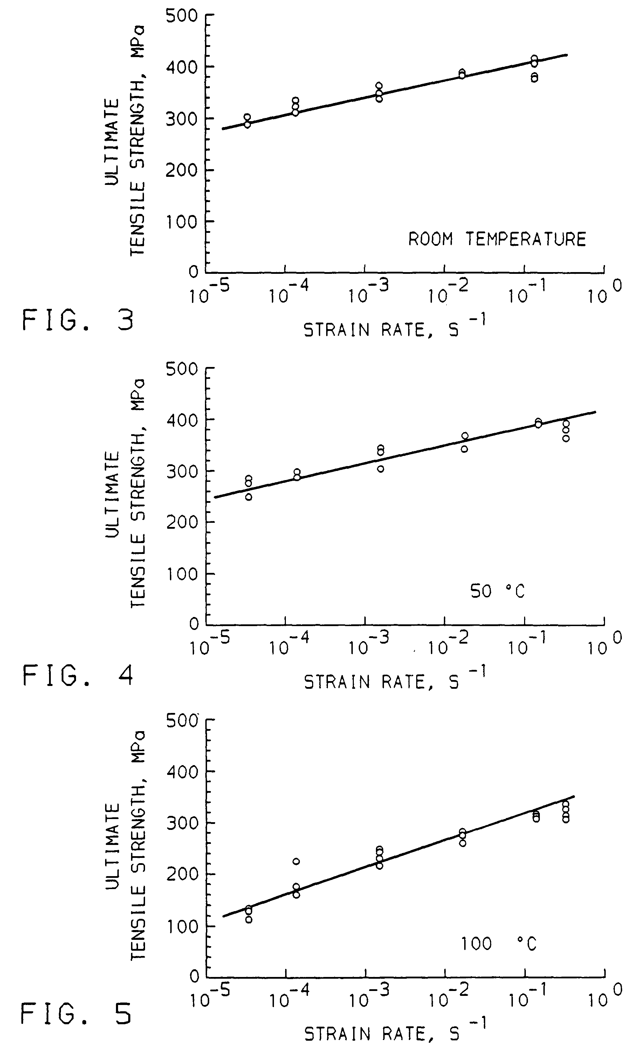

Figure 3 shows the variation of ultimate tensile strength (UTS) of this alloy at room temperature (20°C) with increasing strain rate. It was found that when the strain rate is increased from 10⁻⁵ to 10° sec⁻¹, the UTS increased from 280 to 440 MPa (57%).

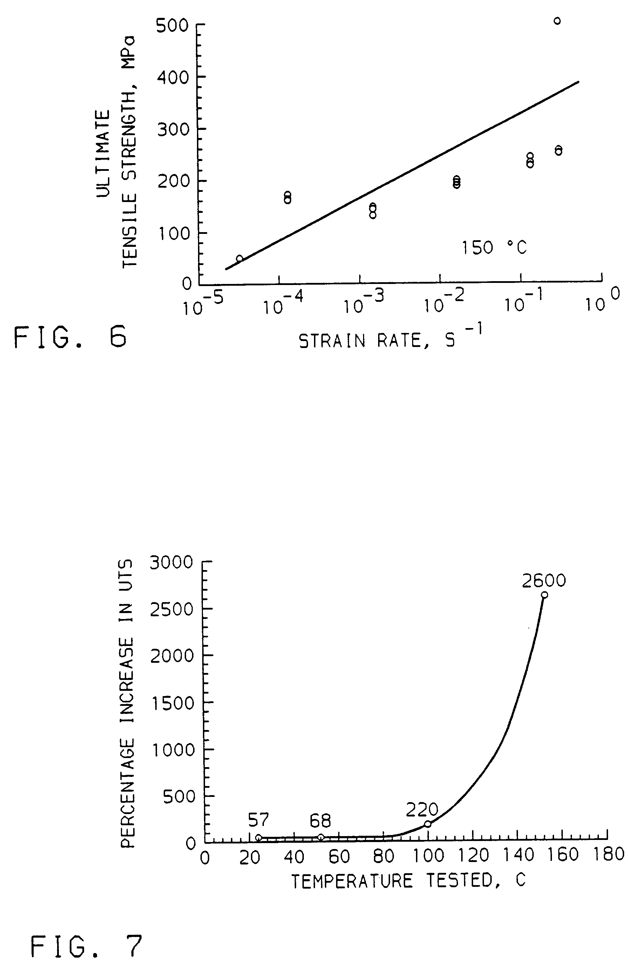

The percentage increase in ultimate tensile strength with increasing strain rate was found to be much higher when the specimens were tested at higher temperatures. At 50°C the UTS increased from 250 to 420 MPa (68%) for the same increase in strain rate (Figure 4). The percentage increase was 220% at 100°C (Figure 5), and 2600% at 150°C (Figure 6).

The above data is replotted in Figure 7 to show the percentage increase in UTS with temperature when the strain rate increases from 10⁻⁵ to 10° sec⁻¹. It is clearly shown that the strain rate sensitivity increases dramatically above 80°C.

A typical microstructure of the alloy has fine epsilon and eta grains dispersed in a ternary eutectic matrix. The microstructure is much coarser inside the specimen.

In this investigation, we discovered that ACuZinc™ alloys will strengthen when the strain rate increases between 10⁻⁵ to 10° sec⁻¹, and this increase is greater at higher temperatures. This behavior is unexpected and has not been reported before. Alloys such as aluminum, copper, stainless steel are not strain rate sensitive when tested at room temperature. The strain rate sensitivity of pure iron and steel alloys is much smaller than that found in ACuZinc™ alloys at room temperature. Iron and steels lose their strain rate sensitivity when tested at higher temperatures (reported up to 200°C).

With this discovery ACuZinc™ die cast alloys can be used with confidence at higher temperatures for components in fast loading/high temperature applications. The unexpected increase in strength with strain rate during high temperature testing provides increased potential use of these parts in many applications which can be subjected to a combination of high strain rates and high temperature conditions as during an impact in a collision. It may also be applicable in other systems such as the air bag system where increase strength at high rate deformation is important.

### Data:

In Table 1 the Ultimate Tensile Strength of the alloy tested is compared to commercial zinc base alloys (Zamak 3 and ZA 8 alloys) tested at two different temperatures and strain rate of 1.312 x 10⁻³ sec⁻¹. The results show that the ultimate tensile strength at 50°C for ACuZinc™ was the same as that measured at room temperature (20°C). 351 MPa at 50°C (100°F) compared to 347 MPa at room temperature. However, the Ultimate Tensile Strength of commercial Zamak 3 alloy was 253 MPa at 20°C but 227 MPa when is tested at 50°C; for ZA 8 alloy it was 336 MPa at 20°C vs. 283 MPa when tested at 50°C.

**Table 1**

| Temperature | Alloy Tested UTS,MPa | Zamak 3 UTS,MPa | ZA 8 UTS,MPa |
|---|---|---|---|
| 20°C | 347 | 253 | 336 |
| 50°C | 351 | 227 | 283 |

Components constructed from the ACuZinC™ alloy provide resistance to deformability and damage when the components are under mechanical loadings at high strain rates or when they are impacted as in a crash or collision situation. Even though ACuZinc™ is a zinc-base alloy, it has surprisingly been discovered that high load bearing components manufactured from ACuZinc™, that is, components subjected to loadings between 40-500 MPa, exhibited a dramatic improvement in strength. Examples of high load components include seat belt assembly components, actuators, gears, seat actuators, seat racks, racks, motor mounts, electronic housings, and other components which must remain functional during an automotive collision.

The invention includes a vehicle air bag system with select components made from an alloy ACuZinc™. The following is a detailed description of a suitable air bag system.

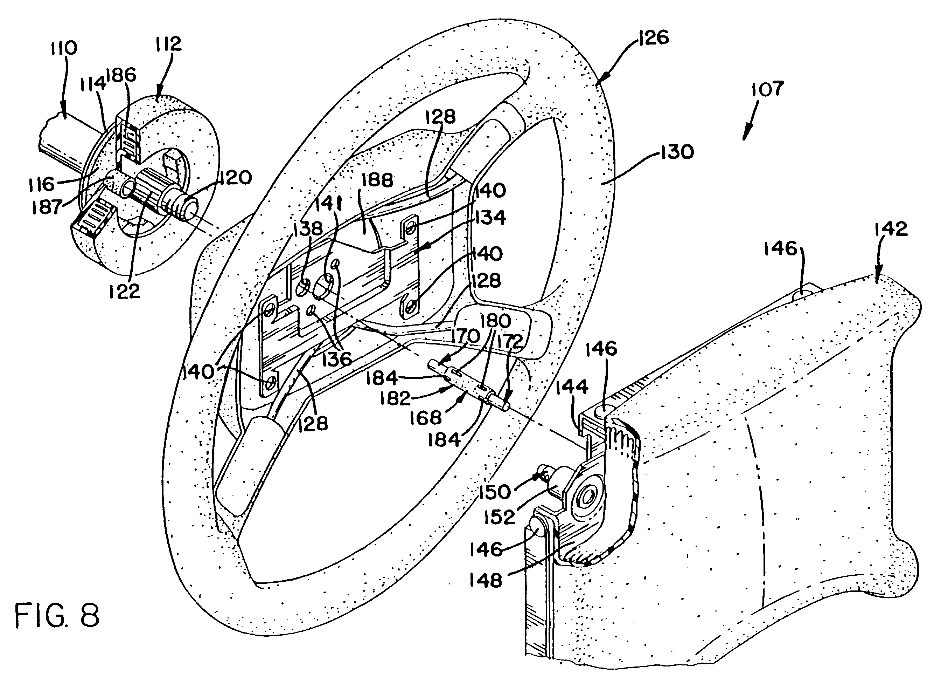

Referring to Figures 8, 9, and 10 the horn activation and steering wheel assembly 107 of the present invention has a steel shaft column 110. The column 110 transmits a torsional input from the driver of the vehicle to a steering system (not shown). The column 110 is also electrically connected to the ground of the electrical system of the vehicle. Mounted on the column 110 is a horn contact plate 112. The horn contact plate has an electrically conducting portion 114 typically fabricated from brass or other highly conductive material. The conducting portion 114 is generally shaped as a flat annular ring and is electrically isolated from the column 110 by an inner mounting polymeric piece 116. Removed from the drawing for clarity of illustration, a coil spring captured between a shoulder (not shown) on the column 110 and an internal flange portion (not shown) in a bore 118 of the inner mounting member urges the horn contact plate 114 toward a threaded end 120 of the column 110.

Fitted over a splined portion 122 of the column is a hub 124 of a steering wheel 126. The hub 124 has weldably connected thereto four spokes 128 which connect with an outer rim 130 of the steering wheel. A nut 132 is threadably engaged onto the column 110 to retain the hub 124 axially upon the column 110.

Also fixably connected to the column 110 by the nut 132 is a steering wheel mounting plate 134. The steering wheel mounting plate 134 has two holes 136 allowing it to be fixably connected to the hub 124 by virtue of cap screws (not shown). Additionally, the steering wheel mounting plate 134 has a larger hole 138 for purposes to be described later and four outer mounting holes 140 along its outer perimeter. Lastly, the steering wheel mounting plate 134 has a central hole 141 allowing for penetration of the threaded end 120 of the column. The steering wheel mounting plate 134 is electrically connected with the column 110.

Mounted to the steering wheel mounting plate is a module 142. The module 142 includes a module pad retainer 144 which is connected by rivets 146 with a module base plate 148. Fixably connected to the module base plate 148 are four projecting pins 150 having surrounding annular bells 152. Each pin 150 has a ball lock 154. The module base plate 148 also mounts an SIR canister or inflator 155, a fabric air bag 156 and a cover 158. The inflator 155 carries chemicals which are selectively pyrolyzed upon impact of the vehicle. The pyrolysis of the chemicals rapidly form gases which flow out of holes formed in the inflator and fill the air bag 156. The pyrolyzed chemicals reach temperatures of 250°C-500°C or higher in 60 milliseconds or less. The inflator 155 and other components of the air bag system may be heated up to above 500°C upon pyrolysis of the chemicals on the inflator 155 while the inflator 155 and other components are exposed to pressures of 40-500 MPa and above.

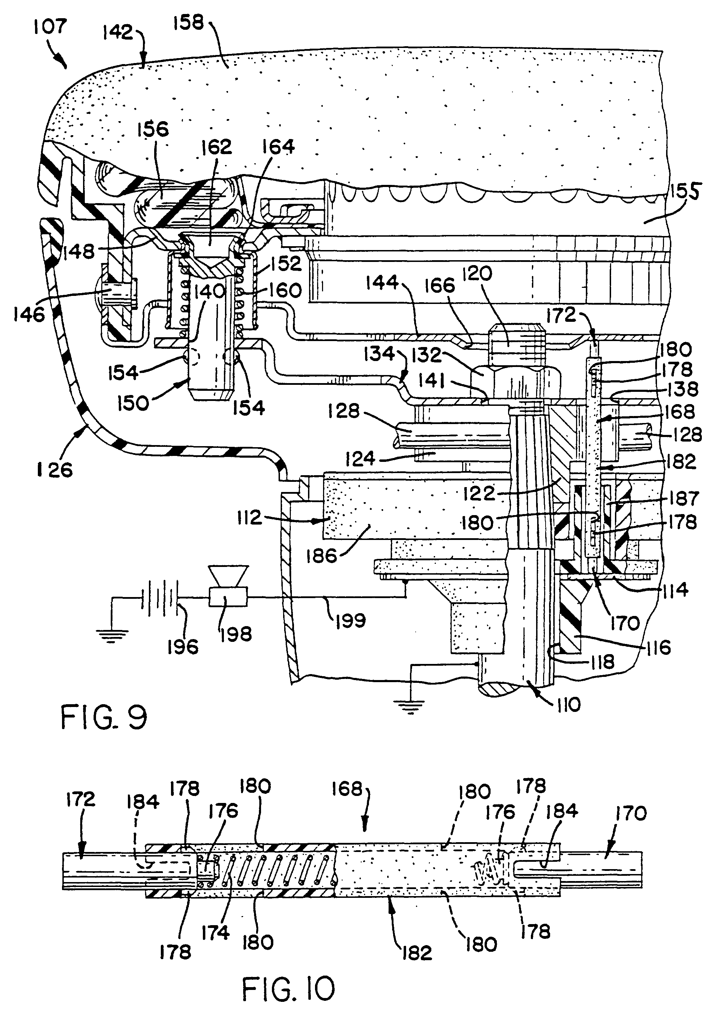

The module 142 is biased to a first position from the steering wheel mounting plate 134 by springs 160 which push up against the top portion of the bells 152. The springs 160 bottom end (as shown in Figure 9) presses against the steering wheel mounting plate 134. A top portion 162 of the pin 150 is surrounded by an elastomeric or polymeric grommet 164. Thus, pin 150 and steering wheel mounting plate 134 are electrically isolated from the module base plate 148. The module pad retainer 144 has a central opening 166 which allows for penetration of the threaded end 120 of the column.

To electrically connect the module pad retainer 144 with the conducting portion 114 of the horn contact plate, there is provided a wireless electric lead 168. The wireless electric lead has a first contact 170 which electrically connects with the conducting portion 114 of the horn contact plate and a second lead 172 which makes continual contact with the module pad retainer 144. The ends 172 and 170 are spring biased away from one another by a conducting coil spring 174 fabricated from a tin-coated musical spring steel. The coil spring will typically have a spring rate of approximately two pounds per inch, having 114 coils per inch with a diameter of 0.5 mm. Each lead has a spring mounting stud 176 and stud members 178 which are captured in longitudinal slots 180 provided in a polymeric tubular insulator 182 which surrounds the spring 174. The insulator 182 at its opposing end has a slot 184 provided for installing the ends 170 and 172.

Electrical lead 168 is positioned through a slot provided in the hub 124 and penetrates through the inner hole of an SIR exciter coil 186. To align the lead 168, there is provided a tower member 187. As shown, tower member 187 is one piece. However, it may be desired to comprise several different pieces. If desired, the tower 187 may be made to be integral with the insulating portion 116 of the horn contact plate 112. Not shown for clarity of illustration is a steering lock and an associated insulator which typically will abut an end of the horn contact plate toward the column end 120 (with the exception of that portion of the horn contact plate which is contacted by the lead 168).

Referring to Figure 8, a void 188 is provided to allow a wire (not shown) from the coil 187 to be connected to the inflator 155. To actuate the horn, the module 142 will be pushed downward against the biasing of spring 160 to cause the bell housing 152 to contact the steering wheel module plate at least at one of its four locations. The above action causes the module 142 to come into its second position wherein it is electrically connected to the steering wheel mounting plate 134.

Current then flows from a source of electric energy 196 to a horn 198 located remotely through a lead wire 199 shown schematically to the conducting portion 114 of the horn contact plate to the first lead 170. Current then flows through the conducting wire 174 to the second lead 172 to the module pad retainer 144, through rivet 146 to module base plate 148 to bell housing 152 to steering wheel mounting plate 134, to the nut 132, column 110 and then to ground, completing the current and thereby activating the horn.

The electric lead 168 eliminates a previous lead wire which connected the horn contact plate conducting portion 114 to the module pad retainer 166. This wire had to be sufficiently long enough to allow it to be attached to the module pad retainer 144 before assembly of the module 142 to the steering wheel mounting plate 134. The length of the wire had to be sufficiently long to be easy to assemble. However, a sufficient length was found to be inconvenient due to the proper placement of the lead wire after the module 142 was assembled to the steering wheel mounting plate 134. If not done correctly, such a wire could cause rattling vibrational noise which could be an irritant to an occupant of the vehicle. Also, the prior wire could short or get cut on a sharp edge of the steering wheel assembly.

To assemble module 142 to the steering wheel mounting plate, the pins 150 are aligned with the holes 140 in the mounting plate and simply pushed inwardly, allowing the ball locks 154 to then pop back out, retaining the module plate to the steering wheel mounting plate 134.

The improvement in the above-described system according to the present invention is that components subjected to high strain rate and high temperatures are made from an alloy, namely ACuZinc™. The projecting pins 150, annular bells 152 and inflator 155 may be made from the alloy ACuZinc™. The inflator 155 may be die cast to final dimensions from ACuZinc™. When the chemicals held in the inflator 155 are ignited, the inflator is subjected to a very high rate of strain and at a very high temperature. Zinc-based alloys would not be expected to be suitable for this application or use. Likewise, the projecting pins 150, and annular bells 152 are subjected to very high strain rates and temperatures when the air bag system goes off.

## Claims

1. A vehicle air bag system comprising:
a steering wheel shaft (110);
a steering wheel mounting plate (134) mounted to the steering wheel shaft (110);
an air bag module retainer (144) fixably connected to the steering wheel mounting plate (134) by a plurality of projecting pins (150);
an air bag (156) connected to the retainer (144);
an inflator (155) for carrying chemicals that form gases that fill the air bag (156), said inflator (155) fixed to the air bag module retainer (144); and
wherein said projecting pins (150) comprise an alloy consisting of, by weight, between 4 and 12 percent copper, 2 and 4 percent aluminum, and the balance zinc and impurities and having fine epsilon and eta grains dispersed in a ternary eutectic matrix.

2. A vehicle air bag system as set forth in claim 1 wherein said inflator (155) includes a die casting of said alloy.

3. A vehicle air bag system as set forth in claim 1 further comprising an annular bell (152) surrounding a portion of each projecting pin (150) and a spring (160) surrounding a portion of each projecting pin (150) and engaging the annular bell (152) so that the air bag module retainer (144) and annular bell (152) are biased away from the steering wheel mounting plate (134), and wherein each annular bell (152) comprises said alloy.

## Patentansprüche

1. Fahrzeugluftsacksystem mit:
einer Lenkradwelle (110);
einer Lenkradbefestigungsplatte (134), die an der Lenkradwelle (110) befestigt ist;
einem Luftsackmodulhalter (144), der fest mit der Lenkradbefestigungsplatte (134) durch eine Vielzahl von vorragenden Stiften (150) verbunden ist;
einem Luftsack (156), der mit dem Halter (144) verbunden ist;
einer Aufblaseinrichtung (155), die Chemikalien trägt, welche Gase bilden und den Luftsack (156) füllen, wobei die Aufblaseinrichtung (155) an dem Luftsackmodulhalter (144) befestigt ist; und
wobei die vorragenden Stifte (150) eine Legierung umfassen, die zwischen 4 und 12 Gew.-% Kupfer, 2 und 4 Gew.-% Aluminium und als Rest Zink und Unreinheiten umfasst und feine Epsilon- und Eta-Körner aufweist, die in einer ternären eutektischen Matrix verteilt sind.

2. Fahrzeugluftsacksystem nach Anspruch 1, wobei die Aufblaseinrichtung (155) einen Druckguss der Legierung umfasst.

3. Fahrzeugluftsacksystem nach Anspruch 1, ferner mit einer ringförmigen Glocke (152), die einen Abschnitt jedes vorragenden Stiftes (150) umgibt, und einer Feder (160), die einen Abschnitt jedes vorragenden Stiftes (150) umgibt und mit der ringförmigen Glocke (152) in Eingriff steht, so dass der Luftsackmodulhalter (144) und die ringförmige Glocke (152) von der Lenkradbefestigungsplatte (134) weg vorgespannt sind, und wobei jede ringförmige Glocke (152) die Legierung umfasst.

## Revendications

1. Système de coussin pneumatique de sécurité pour véhicule comprenant :
un arbre de volant de direction (110) ;
une plaque de fixation de volant de direction (134) montée sur l'arbre de volant de direction (110) ;
un dispositif de retenue (144) de module de coussin pneumatique de sécurité relié de manière fixe à la plaque de fixation de volant de direction (134) par une pluralité de goupilles faisant saillie (150) ;
un coussin pneumatique de sécurité (156) relié au dispositif de retenue (144) ;
un gonfleur (155) destiné à transporter des produits chimiques formant les gaz de remplissage du coussin pneumatique de sécurité (156), ledit gonfleur (155) étant fixé au dispositif de retenue (144) de module de coussin pneumatique de sécurité ; et
dans lequel lesdites goupilles faisant saillie (150) sont composées d'un alliage comprenant en poids entre 4% et 12% de cuivre, 2% et 4% d'aluminium, le reste étant du zinc et des impuretés, et ayant des grains fins epsilon et eta dispersés dans une matrice ternaire eutectique.

2. Système de coussin pneumatique de sécurité pour véhicule selon la revendication 1, dans lequel ledit gonfleur (155) comprend une pièce moulée sous pression à partir dudit alliage.

3. Système de coussin pneumatique de sécurité pour véhicule selon la revendication 1 comprenant en outre une ceinture en anneau (152) entourant une partie de chaque goupille faisant saillie (150) et un ressort (160) entourant une partie de chaque goupille faisant saillie (150) qui engage la ceinture en anneau (152) de façon à écarter le dispositif de retenue (144) de module de coussin pneumatique de sécurité et la ceinture en anneau (152) de la plaque de fixation de volant de direction (134), et dans lequel chaque ceinture en anneau (152) est constituée dudit alliage.
